# EUROPÄISCHE PATENTSCHRIFT

(11) **EP 0 464 345 B1**
(45) Veröffentlichungstag und Bekanntmachung des Hinweises auf die Patenterteilung: **01.02.1995**
(21) Anmeldenummer: 91108001.8
(22) Anmeldetag: 17.05.1991
(51) Int. Cl.: B29C 53/08, B29C 53/82, B29C 35/02, B29C 33/76

(54) **Verfahren und Vorrichtung zum Verformen von Werkstücken aus thermoplastischen Kunststoffen**
Process and apparatus for deforming thermoplastic parts
Procédé et appareil pour la déformation de pièces en matière thermoplastique

(30) Priorität: 23.05.1990 DE 4016558; 22.03.1991 DE 4109370
(43) Veröffentlichungstag der Anmeldung: 08.01.1992
(73) Patentinhaber: FRAUNHOFER-GESELLSCHAFT ZUR FÖRDERUNG DER ANGEWANDTEN FORSCHUNG E.V., 80636 München (DE)
(72) Erfinder: Fröhlich, Stefan, Dipl.-Ing. (FH), W-7075 Mutlangen (DE); Maier, Dieter, Dipl.-Ing., W-7000 Stuttgart 40 (DE); Egner, Harald, Dipl.-Ing., W-7000 Stuttgart 50 (DE)

(56) Entgegenhaltungen:
- EP-A- 0 305 664
- BE-A- 634 525
- DE-A- 3 042 938
- DE-A- 3 542 461
- FR-A- 1 304 945
- FR-A- 2 254 420
- GB-A- 935 560
- US-A- 4 065 242
- SOVIET INVENTIONS ILLUSTRATED Week 8951, 7. Februar 1990 Derwent PublicationsLtd., London, GB; AN 89-376497/51

## Beschreibung

Die Erfindung betrifft ein Verfahren und einen biegsamen Heizkern zum Verformen von, rohrförmigen Werkstücken aus thermoplastischen Kunstsstoffen gemäß den Oberbegriffen des Verfahrensanspruches und des Vorrichtungsanspruches.

Ein derartiges Verfahren ist aus der GB-A-935560 bekannt. Darin wird ein Verfahren von rohrförmigen Werkstücken beschrieben, nach dem das Rohr zunächst mit einem flüssigen Medium gefüllt, eine in zweiteilige Form eingelegt und anschließend zwecks Vergrößerung des Querschnittes wird in das Rohr, vorzugsweise Druckluft oder zusätzliches Medium, eingepumpt. Im Anschluß wird die Form erwärmt und dem Werkstück durch die erhöhte Temperatur eine der Form entsprechende, bleibende Gestalt gegeben. Dabei ist vorgesehen, daß das zu verformende Rohrwerkstück vor dem Einlegen in die Form auf seine Erweichungstemperatur gebracht wird und anschließend in der Form auf eine Temperatur erwärmt wird bei der bleibende Verformung eintritt. Das rohrförmige Werkstück muß von einer Seite geschlossen sein, damit es das zu seiner Verformung notwendige Medium (flüssiges Medium und Druckluft) aufnehmen kann. Während des Verformungsvorganges dehnt sich das Rohr in Quer- und Längsrichtung aus.

Ein biegsamer Heizkern der oben genannten Art ist aus der US-A-4 065 242 bekannt.

Die US-A-4 065 242 nimmt Bezug auf ein konventionelles Verfahren zur Verformung von Kunststoffrohren. Es wird eine Einrichtung zur Erwärmung eines zu verformenden Rohres vor dem Verformungsvorgang beschrieben. Diese Einrichtung/Heizkern weist ein flüssiges Medium auf, welches durch eine erzwungene Strömung in der Einrichtung zirkuliert. Nach der Einführung des Heizkernes in das zu verformende Rohr wird das Medium erwärmt, wodurch sich der Heizkern ausdehnt und seine Wandung die Wandung des Rohres berührt. Zusätzlich kann auch eine Heizspirale vorgesehen sein, die das Medium erwärmt. Das vor der Verformung durch die Erwärmung biegsam gemachte Kunststoffrohr wird anschließend nach einem nicht näher beschriebenen Umformverfahren in einer Form verformt.

Daneben sind z.B. aus der FR-A-2 254 420 oder der EP-A-0 305 664 und FR-A-1 304 945 verschiedene Einrichtungen bekannt, die beim Umformen oder Verschweißen von Kunststoffrohren eingesetzt werden. Jedoch offenbaren diese Druckschriften Verfahren, denen andere prinzipielle Überlegungen zugrunde liegen.

Der Erfindung liegt die Aufgabe zugrunde, das gattungsgemäße Verfahren und den Heizkern so auszugestalten, daß unter Vermeidung der oben geschilderten Nachteile das Verfahren gebrauchsvorteilhaft und preisgünstig durchführbar ist.

Diese Aufgabe ist erfindungsgemäß durch das im Anspruch 1 angegebene Verfahren und durch den im Anspruch 2 angegebenen Heizkern gelöst. Eine zweckmäßige Weiterbildung der Erfindung ergibt sich aus dem abhängigen Anspruch 3.

Das erfindungsgemäße Verfahren eignet sich vorzugsweise zum Verformen von rohrförmigen Werkstücken aus thermoplastischen Kunststoffen. Die Werkstücke erhalten nach Abschluß des Verfahrens eine im Raum beliebig liegende Form. Die zum Verformen notwendige Wärmemenge wird nur dem zu verformenden Werkstück von innen zugeführt und das Werkstück dabei bis zur Erweichungstemperatur des Kunststoffes erwärmt. Dabei richten sich die Makromoleküle des Werkstoffes neu aus, und das Werkstück nimmt die durch die Form vorgegebene Gestalt an. Bei der anschließenden Abkühlung des Werkstückes, welches solange in der Form verbleibt, werden die Moleküle in ihrer Lage und Orientierung fixiert, so daß das Werkstück dauerhaft die neue Gestalt annimmt. Da nur das in der Form befindliche Werkstück erwärmt wird, sind die dabei verbrauchten Energiemengen gering. Die örtliche Unabhängigkeit der Form ist gegeben, ihre Größe ist nicht durch das Verfahren begrenzt. Somit können ohne weitere Probleme auch langgestreckte, rohförmige Werkstücke nach dem erfindungsgemäßen Verfahren verformt werden. Das Verfahren wird in einer Form durchgeführt, die der gewünschten Gestalt des Werkstückes entspricht und in die das Werkstück eingelegt wird. Ein biegsamer Heizkern wird in das hohle Werkstück eingeführt. Es kann auch eine Steuer- oder Regeleinrichtung zur Überwachung des Zeit- und Temperaturverlaufes vorgesehen sein. Die Form in die das Werkstück eingelegt wird, kann vorteilhafterweise nur 50% der Kontur des Werkstückes umschließen, so daß ein leichtes Einlegen möglich ist. Anschließend kann mittels geeigneter Griffe, welche kraft- und/oder formschlüssig ausgebildet sind, das Werkstück an bestimmten Stellen gehalten werden. Das Material der Form wird in Abhängigkeit von den wärmeisolierenden Erfordernissen gewählt. Es kann Metall, beschichtetes Metall, thermisch belastbarer Kunststoff, Glas etc.sein. Die Steuerung des Erwärmungsvorganges ist im einfachsten Fall eine Zeit-Abschaltautomatik. Es wird empirisch eine Zeit ermittelt, nach welcher der Strom abgeschaltet werden muß, damit keine weitere Erwärmung des Werkstückes stattfindet. Es können auch Regeleinrichtungen vorgesehen werden, die den Strom in Abhängigkeit von der am Formteil aufgenommenen Temperatur schalten oder begrenzen.

Erfindungsgemäß ist zur Durchführung des Verfahrens ein biegsamer Heizkern, welcher in das hohle Werkstück eingeführt wird, vorgesehen. Der Heizkern besteht aus einer Isolatorhülle, in der eine Heizleiterwicklung angeordnet ist. Die Heizleiterwicklung wird mit Nieder- oder Normalspannung, mit Gleich- oder Wechselstrom gespeist. Die geringen notwendigen Energien zum Aufheizen der Heizleiterwicklung und der Einsatz von Spannungen unter 50 Volt machen den Einsatz des erfindungsgemäßen Heizkernes unbedenklich. Mit Akkumulatoren kann ein produktionstechnischer Materialfluß unabhängig vom Netz und einfach aufgebaut und ausgebaut werden. Die Isolatorhülle besteht vorteilhafterweise aus Teflon oder Glasseide. Sie ist an ihrer äußeren Wandung mit einer Gleitschicht versehen. Die Gleitschicht erleichtert das Einführen des Heizkernes in das Werkstück und besteht vorteilhafterweise aus Teflon. In der Mitte des Heizkernes erstreckt sich in Längsrichtung eine Zugentlastung, welche vorzugsweise aus einem Stahlseil oder aus einem Drahtgeflecht besteht. Die Zugentlastung ist an ihrem einen Ende durch eine geeignete Aufnahme in dem Heizstab befestigt, an dem anderen Ende tritt sie nach außen.

Die äußere Kontur des Heizstabes ist geringfügig kleiner als die Innenkontur des zu verformenden Werkstückes, dies hat den Vorteil der einfacheren Einführung des Heizstabes in das zu verformende Werkstück.

In den nachfolgenden Figuren ist ein Ausführungsbeispiel der erfindungsgemäßen Vorrichtung dargestellt. Es zeigen:
- Fig. 1:: eine Form mit einem darin eingelegten zu verformenden Werkstück und einem Heizkern
- Fig. 2:: einen biegsamen Heizkern

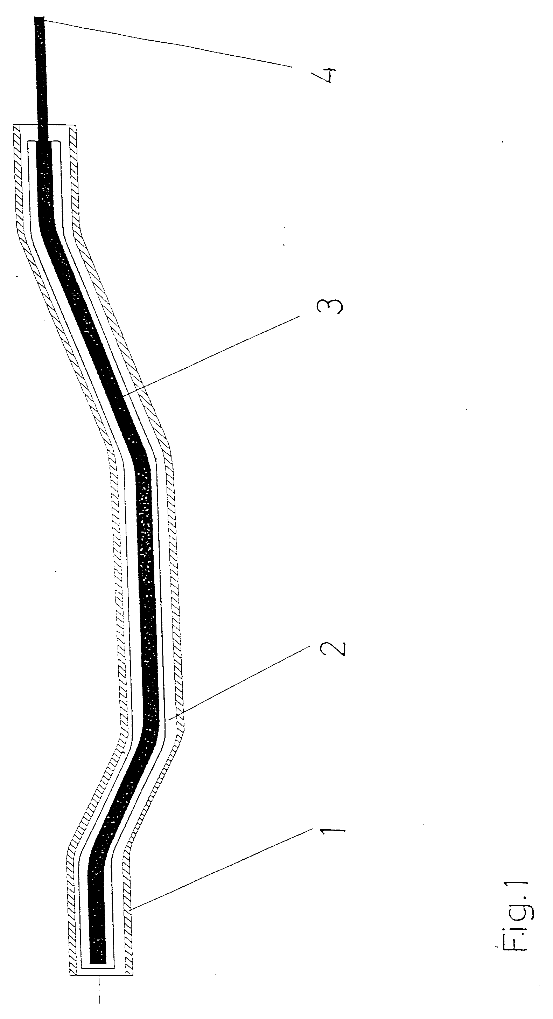

In Fig. 1 ist eine Form 1 mit einem darin eingelegten zu verformenden Werkstück 2 und einem biegsamen Heizkern 3 dargestellt. Die Form 1 weist eine Gestalt auf, wie sie später das fertige Werkstück 2 annehmen soll. Der biegsame Heizkern 3 befindet sich im Inneren des Werkstückes 2. Aus der Form 1 und aus dem Werkstück 2 tritt die Zugentlastung 4 des Heizkernes 3 aus.

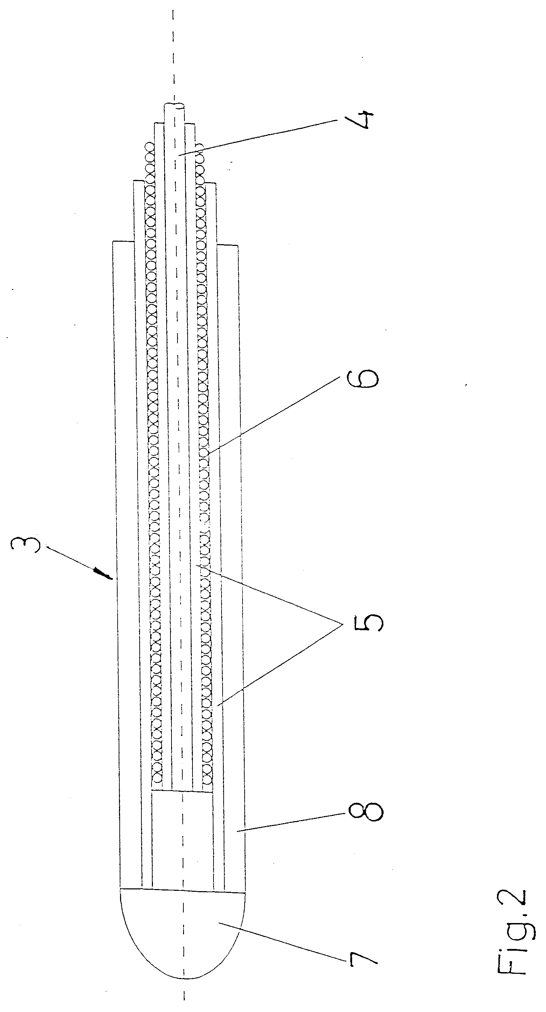

In Fig. 2 ist der erfindungsgemäße biegsame Heizkern 3 dargestellt. Der Heizkern 3 weist eine Isolatorhülle 5, eine Heizleiterwicklung 6 und eine Zugentlastung 4 auf. Die Zugentlastung 4 erstreckt sich in Längsrichtung des Heizkernes 3 und verläuft in dessen Mitte. Ferner weist der Heizkern 3 eine Aufnahme 7 für die Zugentlastung 4 auf. Die Isolatorhülle 5, die vorzugsweise aus Teflon oder Glasseide besteht, ist an ihrer äußeren Wandung mit einer Gleitschicht 8 versehen. Die Gleitschicht 8 besteht vorzugsweise aus Teflon.

## Patentansprüche

1. Verfahren zum Verformen von rohrförmigen Werkstücken (2) aus thermoplastischen Kunststoffen in einer Form (1) durch Wärmeeinwirkung, wobei die zum Verformen notwendige Wärmemenge dem zu verformenden Werkstück (2) von innen zugeführt wird und das Werkstück (2) dadurch auf eine solche Temperatur gebracht wird und die Temperatur solange erhalten bleibt, bei der das Werkstück (2) die durch die Form (1) vorgegebene Gestalt annimmt, **dadurch gekennzeichnet**, daß das Werkstück (2) ohne Erwärmung in die Form (1) eingelegt wird und die zur Verformung notwendige Wärmemenge ausschließlich dem in der Form (1) befindlichen Werkstück (2) zugeführt wird.

2. Biegsamer Heizkern zur Durchführung des Verfahrens nach Anspruch 1, **dadurch gekennzeichnet**, daß ein Heizkern (3) bei dem in einer Isolatorhülle (5) eine Heizleiterwicklung (6) mittig angeordnet ist und mit einer in der Mitte desselben angeordneten, sich in seiner Längsrichtung erstreckenden Zugentlastung (4) vorhanden ist, wobei die Zugentlastung (4) in einer Aufnahme (7) an einem Ende des Heizkerns (3) angeordnet ist und an seinem anderen Ende nach außen ausläuft.

3. Biegsamer Heizkern nach Anspruch 2, **dadurch gekennzeichnet**, daß die Zugentlastung (4) aus einem Stahlseil oder Drahtgeflecht besteht.

## Claims

1. A process for the deformation of tubular workpieces (2) made of thermoplastics in a mould (1) by the action of heat, the amount of heat required for the deformation being supplied from the interior to the workpiece (2) for deformation so that the workpiece (2) is brought to a temperature such that, and the temperature is maintained until, the workpiece (2) assumes the shape predetermined by the mould (1), characterised in that the workpiece (2) is placed in the mould (1) without heating and the amount of heat required for deformation is supplied only to the workpiece (2) in the mould (1).

2. A flexible heating core for performing the process according to claim 1, characterised in that a heating core (3), in which a heating conductor winding (6) is disposed centrally in an insulating sheath (5), is provided with a tension relief means (4) disposed in the centre of the heating core and extending in the longitudinal direction thereof, the tension relief means (4) being disposed in a holder (7) at one end of the heating core (3) and extending to the exterior at its other end.

3. A flexible heating core according to claim 2, characterised in that the tension relief means (4) consists of a steel cable or braided wire.

## Revendications

1. Procédé pour déformer des pièces tubulaires (2) en matière thermoplastique dans un moule (1) par action de la chaleur, la quantité de chaleur nécessaire à la déformation étant fournie de l'intérieur a la pièce (2) à déformer et la pièce (2) étant élevée à une température telle qu'elle reste maintenue aussi longtemps pour que la pièce (2) adopte la forme prédéterminée par le moule (1), caractérisé en ce que la pièce (2) est placée sans préchauffage dans le moule (1) et la quantité de chaleur nécessaire à la déformation est fournie exclusivement à la pièce (2) placée dans le moule (1).

2. Noyau de chauffage souple pour la mise en oeuvre du procédé selon la revendication 1, caractérisé par un noyau chauffant (3) avec en son milieu un enroulement d'un conducteur chauffant (6) dans une gaine isolante (5) et une décharge en traction (4) s'étendant dans la direction longitudinale au milieu du noyau en étant placée dans un moyen de réception (7) à l'extrémité du noyau chauffant (3), son autre extrémité sortant du noyau.

3. Noyau chauffant souple selon la revendication 2, caractérisé en ce que la décharge en traction (4) est un câble d'acier ou un tressage de fils.
